# EUROPEAN PATENT APPLICATION

(11) **EP 4 385 791 A1**
(43) Date of publication of application: **19.06.2024**
(21) Application number: 23275164.4
(22) Date of filing: 16.11.2023
(51) Int. Cl.: B60L 5/36, B60L 5/42, B60L 50/53, B60L 53/65

(54) **POWER DELIVERY SYSTEM**

(30) Priority: 30.11.2022 US 202263429092 P; 11.09.2023 US 202318464851
(71) Applicant: Transportation IP Holdings, LLC, Norwalk, CT 06851 (US)
(72) Inventor: Kumar, Ajith, Norwalk, 06851 (US)
(74) Representative: Ayre, Nicola Unity

(57) **Abstract**

A power delivery system (102) may include a collector device (104) that can selectively couple a vehicle (100) with a delivery device (308) coupled with an off-board power source (310). The collector device (104) may include conductive contacts (212, 214, 216, 218, 312, 314, 316, 318) that each can engage the delivery device (308). The contacts (212, 214, 216, 218, 312, 314, 316, 318) may switch modes of operation to change a power transfer capability of the collector device (104). The contacts (212, 214, 216, 218, 312, 314, 316, 318) may separately conduct a positive potential, conduct a negative potential, conduct a communication signal, and provide a connection to a ground reference (426) in a first mode of operation of the modes of operation. The contacts (212, 214, 216, 218, 312, 314, 316, 318) may separately conduct the positive potential, conduct an additional amount of the positive potential, conduct the negative potential, and conduct an additional amount of the negative potential in a second mode of operation of the modes of operation.

## Description

### CROSS-REFERENCE TO RELATED APPLICATIONS

This application claims priority to U.S. Patent Application No. 18/464,851 (filed 11-September-2023), which claims priority to U.S. Provisional Application No. 63/429,092 (filed 30-November-2022), the entire disclosures of which are incorporated herein by reference.

### BACKGROUND

### Technical Field.

The subject matter described herein relates to systems that deliver power to a powered system from a power source that is external to the powered system.

### Discussion of Art.

Some powered systems are at least partially powered by electric current, or potential supplied by an off-board source and received by the powered systems during movement of the powered systems. These powered systems may receive the power via collector devices, such as pantographs that engage overhead catenaries, conductive shoes that engage electrified rails, or the like.

Some of these collector devices may be limited in the amount of power that the collector devices can draw or conduct from the off-board source. For example, the number of conductive contacts in the collector devices may be limited, with some contacts used for communication, other contacts used for checking ground connections, and the like. It may be desirable to have a system and method that differs from those that are currently available.

### BRIEF DESCRIPTION

In one example, a power delivery system is provided that may include a collector device that can selectively couple a vehicle with a delivery device coupled with an off-board power source. The collector device may include conductive contacts that each can engage the delivery device. The contacts may switch modes of operation to change a power transfer capability of the collector device. The contacts may separately conduct a positive potential, conduct a negative potential, conduct a communication signal, and provide a connection to a ground reference in a first mode of operation of the modes of operation. The contacts may separately conduct the positive potential, conduct an additional amount of the positive potential, conduct the negative potential, and conduct an additional amount of the negative potential in a second mode of operation of the modes of operation.

In another example, a method (for controlling conduction of power between a vehicle and a delivery device) may include selectively coupling a collector device of a vehicle with a delivery device coupled with an off-board power source, separately conducting a positive potential and a negative potential between the power source and the vehicle via different contacts of the collector device in a first mode of operation, separately establishing a grounding connection and a communication pathway between the power source and the vehicle via the different contacts of the collector device in the first mode of operation, switching the different contacts from the first mode of operation to a second mode of operation, and separately conducting the positive potential, an additional amount of the positive potential, the negative potential, and an additional amount of the negative potential between the power source and the vehicle via the different contacts of the collector device in the second mode of operation.

In another example, a power delivery system may include a collector device that can be coupled with a powered system and may include separate conductive contacts that can engage with corresponding contacts of a delivery device coupled with a power source that is outside the powered system. The power delivery system may include a controller that can switch one or more of the contacts of the collector device from providing one or more of a communication pathway with the power source or a grounding connection in a first mode of operation to conducting additional potential between the power source and the powered system in a second mode of operation to increase a power transfer between the power source and the powered system.

### BRIEF DESCRIPTION OF THE DRAWINGS

The subject matter may be understood from reading the following description of non-limiting embodiments, with reference to the attached drawings, wherein below:
Figure 1 illustrates one example of a powered system with part of a power delivery system disposed on the powered system;
Figure 2 illustrates the portion of the power delivery system that is onboard the powered system;
Figure 3 illustrates one example of a delivery device of the power delivery system;
Figure 4 illustrates a circuit diagram of one example of the delivery device and loads of the powered system;
Figure 5 illustrates one example of performance of the control connection check or test;
Figure 6 illustrates one example of performance of a ground reference connection check or test;
Figure 7 illustrates one example of performance of another ground reference connection check or test; and
Figure 8 illustrates a flowchart of one example of a method for controlling a power delivery system.

### DETAILED DESCRIPTION

The subject matter described herein relates to systems that deliver power to a powered system from a power source that is external to the powered system. Embodiments described herein relate to power delivery systems and methods that can switch states of conductive contacts in collector devices to change how much electric power may be sent and/or received by a powered system. This may be accomplished during movement of the powered system beneath, above, or alongside conductive pathways that conduct the power to the powered systems. The switching of states of the contacts in the collector devices by the systems can increase the amount of electric power received by the powered system for powering loads of the powered system, such as propulsion loads, auxiliary loads, or the like. While one or more features of the inventive subject matter are described in connection with a mobile powered system, not all embodiments need be mobile. One or more embodiments of the subject matter described herein may be used with powered systems that are stationary.

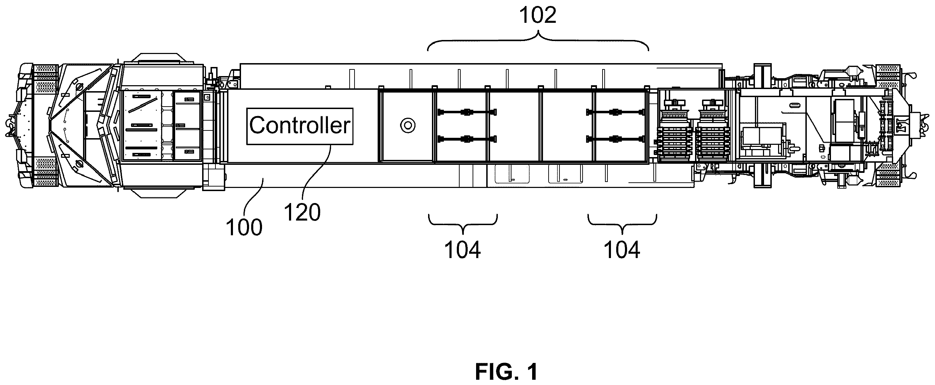

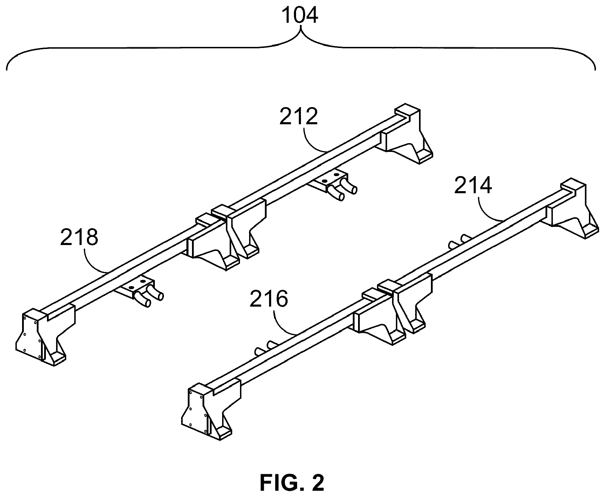

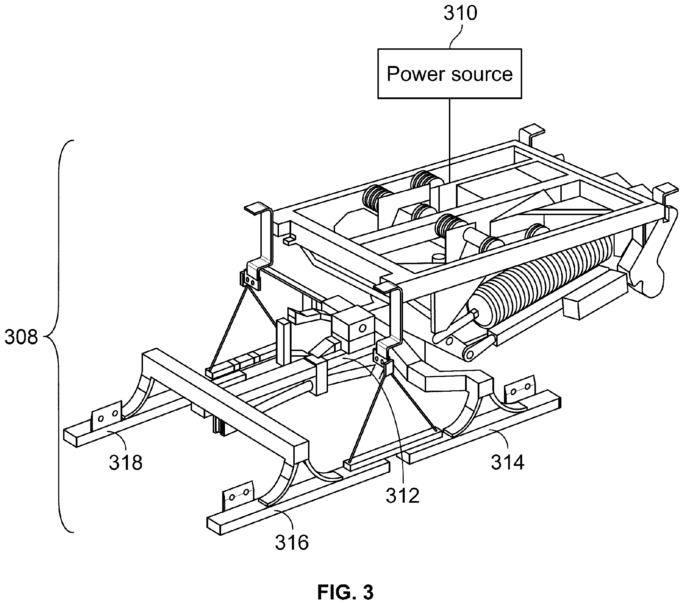

Figure 1 illustrates one example of a powered system 100 with part of a power delivery system 102 disposed on the powered system. In this instance, the powered system is mobile. Figure 2 illustrates a collector device 104 of the power delivery system that is onboard the powered system. The portion of the power delivery system that is shown in Figures 1 and 2 includes the collector device disposed on top of (e.g., on a roof) of the powered system. While the collector device is shown on top of the powered system, the collector device optionally may be disposed beneath and/or on a lateral side of the powered system. The powered system is shown as a mobile system or a vehicle, such as a rail powered system (e.g., a locomotive), but alternatively in other embodiments may be another type of vehicle (e.g., a bus, automobile, truck, mining powered system, etc.). With continued reference to the collector device 104 shown in Figures 1 and 2, Figure 3 illustrates a delivery device 308 of the power delivery system. The delivery device may be part of the power delivery system that is off-board the powered system.

The delivery device may be disposed above the powered system and the collector device and may lower to engage the collector device to transfer electric energy (e.g., potential or current) to loads of the powered system via the collector device. Optionally, the delivery device may be below the powered system and the collector device may lower (and/or the delivery device raises) to engage each other for transferring electric energy. The delivery device may be conductively and/or inductively coupled with an off-board power source 310, such as a utility grid, battery cells, fuel cells, alternators, generators, power conversion devices (e.g., rectifiers, converters, or the like), etc., to provide the electric energy to the powered system via the collector device. The collector device may be conductively and/or inductively coupled with onboard energy storage devices, such as battery cells, flywheels, ultracapacitors, etc., to at least temporarily store the energy obtained from the off-board power source via the delivery device.

The collector device and delivery device each have several conductive contacts that mate with each other to transfer energy, establish communication between the powered system and the power source (or another system off-board the powered system). In the illustrated example, the collector device and the delivery device include corresponding first conductive contacts 212, 312, corresponding second conductive contacts 214, 314, corresponding third conductive contacts 216, 316, and corresponding fourth conductive contacts 218, 318. The corresponding contacts may couple with each other by mating or engaging each other to establish a conductive pathway between those contacts. Optionally, one or more pairs of the corresponding contacts may inductively couple with each other to establish an inductive pathway between those contacts. The coupling of corresponding contacts permits or provides a pathway for the conduction of energy, the passage of communication signals, a pathway to a protective ground reference, or the like. Optionally, the delivery device and/or collector device may include more or fewer contacts. These changes/comments were discussed during our phone call.

In one example, the first contacts may conduct a first part of an electric potential (e.g., a positive voltage or positive direct current (DC)) from the delivery device to the collector device, the second contacts may conduct a second part of the electric potential (e.g., a negative voltage or negative DC) from the collector device to the delivery device, the third contacts may conduct communication signals between the powered system and an off-board system (e.g., the power source or another off-board system), and the fourth contacts may provide a grounding connection to a ground reference (e.g., the chassis of the powered system, the earth via the wheels of the powered system and the track on which the powered system is traveling, etc.). The first contacts may be referred to as positive potential contacts, the second contacts may be referred to as negative potential contacts, the third contacts may be referred to as communication contacts, and the fourth contacts may be referred to as grounding contacts.

The communication signals may be sent to the power source and/or off-board system to identify the powered system, to notify the power source and/or off-board system whether the collector device and the delivery device are connected with each other, the ground reference is connected, to communicate voltage and/or current limits of the powered system, and/or the collector device and delivery device are ready for the transfer of energy. Alternatively, different pairs of these contacts may conduct different ones of the positive DC, the negative DC, the communication signals, or the ground reference pathway. While some examples focus on the energy being transferred from the delivery device to the powered system and/or the communication signals being sent from the powered system to the power source or off-board system via the contacts, optionally, the energy and/or communication signals may be transferred in an opposite direction.

One example of the subject matter described herein allows for an operative state or function of contacts in the delivery device and/or the collector device to switch or change. As described below, this can provide benefits, such as increased power transfer between the power source and the powered system. For example, a powered system controller 120 (shown in Figure 1) onboard the powered system may communicate with a controller of the power source using a communication contact and then change the functionality of one or more of the contacts in the collector device and/or delivery device by changing an operative state or condition of the contacts. This communication can include conducting a relatively low voltage (e.g., twenty-five volts or less, or another value), or can include sending a signal containing data. The controller can represent hardware circuitry that includes and/or is connected with one or more processors (e.g., microprocessors, field programmable gate arrays, integrated circuits, etc.) that operate as described herein in connection with the controller. For example, during a first period of time, a first trip, a first portion of a trip, or the like, the different pairs of contacts may mate to conduct energy, communications, provide a ground reference connection, etc., as described above.

The controller can switch the operative state of one or more pairs of the contacts to transfer more power. The third contacts of the collector and delivery devices can switch from transferring communication signals to transferring additional negative potential or negative DC between the power source and the powered system and/or the fourth contacts of the collector and delivery devices can switch from providing a connection to the ground reference to transferring additional positive potential or positive DC between the power source and the powered system. The controller can make this change permanent or can alternate the contacts between different states or modes to change how much power is being transferred. In case of multiple pantographs, one or all of the connections of the pantograph can switch states or modes.

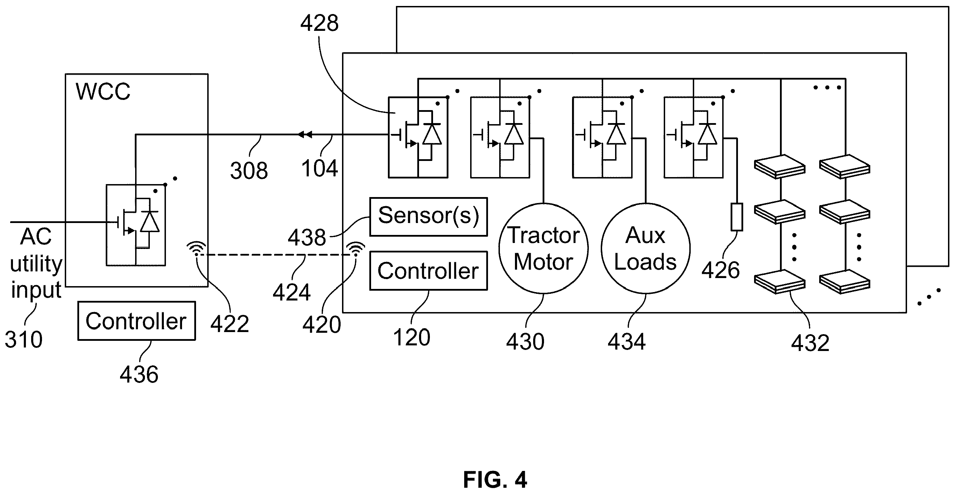

Figure 4 illustrates a circuit diagram of one example of the delivery device and loads of the powered system. The delivery device can be connected with the power source, such as a utility grid (as described above). In the illustrated example, the controller has switched the third contacts from transferring communication signals to transferring additional electric energy. To supplant or replace the lost communication pathway, the power delivery system and/or the powered system may include a communication device 420 that can communicate with a corresponding communication device 422 at the power source or off-board system. These communication devices can represent wireless transceivers, transmitters, receivers, etc., that can wirelessly transfer communication signals 424. These communication signals can be used to inform the power source or off-board system whether the contacts of the collector device and the delivery device are mated with each other and/or whether the contacts of the collector device are grounded (e.g., connected with a ground reference 426). Optionally, other information can be communicated, such as sensor data, states of charge of energy storage devices 432 onboard the powered system that are charged with energy from the power source, operative states of switches 428 onboard the powered system that control conduction and/or invert the received DC into alternating current (AC) for powering loads 430, 434 (e.g., traction motors, auxiliary loads, etc.), etc.

The power delivery system may need to ensure that there is a connection between (a) the delivery device and the collector device and (b) the ground reference if the contacts previously used to establish this connection are switched to transferring additional electric energy. This may be needed due to the power being transferred between the power source and the powered system for safe operation of the powered system, to prevent damage to components onboard the powered system, etc.

In operation, the controller of the powered system (e.g., the powered system controller) can communicate with a controller 436 of the power source (e.g., hardware circuitry that includes and/or is connected with one or more processors, which may be referred to as a power source controller). This communication can involve the communication device of the powered system sending a signal to the communication device of the power source that informs the power source controller that the collector device of the powered system is in position to mate with the delivery device. The power source controller can move the delivery device (e.g., using one or more actuators, such as motors) into contact with the collector device (and/or the powered system controller can move the collector device into contact with the collector device) so that the different pairs of contacts are mated with each other, as described above.

Prior to conducting higher voltages (e.g., five hundred volts or more), however, the power source controller can direct the power source to conduct a lower voltage (e.g., less than one hundred volts, such as fifty volts) and/or a lower current (e.g., less than ten amps, such as one amp) to the collector device via the delivery device. This voltage and/or current may be conducted via the mated first contacts, the mated second contacts, the mated third contacts, and the mated fourth contacts of the delivery and collector devices. The powered system controller may examine the voltage and/or current received by the collector device from the power source via these contacts, such as using the output from one or more sensors 438 that measure voltage and/or current. Optionally, the impedance of the connection(s) between the delivery and collector devices may be measured.

The controllers can communicate with each other to notify each other of the voltage, current, and/or impedance that is expected (e.g., the expected voltage, current, and/or impedance), and the voltage, current, and/or impedance that is measured as being transferred (e.g., the measured voltage, current, and/or impedance). For example, the power source controller can send a signal to the powered system controller that informs the powered system controller of the expected impedance, expected voltage, and/or the expected current, and the powered system controller can send a signal to the power source controller that informs the powered system controller of the measured impedance, measured voltage, and/or measured current.

If there is a difference between the expected and measured voltage, current, and/or impedance, then the power source controller can change the voltage and/or current supplied to the delivery device. For example, the power source controller can direct the power source to increase the voltage, current, and/or impedance responsive to the measured voltage, current, and/or impedance being lower than the expected voltage, current, and/or impedance. As another example, the power source controller can direct the power source to reduce the supplied voltage, current, and/or impedance responsive to the measured voltage, current, and/or impedance being greater than the expected voltage, current, and/or impedance.

Optionally, if there is a difference between the expected and measured voltage, current, and/or impedance, then the powered system controller can evaluate or identify a deteriorated or unhealthy state of the circuitry and/or components of the powered system. For example, if the measured voltage, current, and/or impedance is less than the expected voltage, current, and/or impedance, then the powered system controller can determine that the collector device, the collector device contacts, the switches, the conductive pathways, etc. of the powered system may be inoperable, faulty, etc. The powered system controller can inform the power source controller, such as to direct the delivery device to separate and disconnect from the collector device. Optionally, the powered system controller can control the collector device to separate from the delivery device, such as by directing an operator to move the powered system or automatically controlling the traction motor(s) of the powered system to move (e.g., away from the delivery device).

The power delivery system, including one or more of the controllers, may perform a sequence of two or more tests or checks to ensure that the delivery and collector devices are safely connected to safely transfer power between the devices. While one sequence of these tests or checks is described here, the order of these tests or checks may be changed and/or one or more of the tests or checks may be omitted. As one example, the controllers may perform a control connection check or test, one or more earth or ground reference connection checks or tests, a repeated closed loop connection check or test, and/or an identification check or test. Alternatively, only a single test may be performed, or a greater number of tests may be performed.

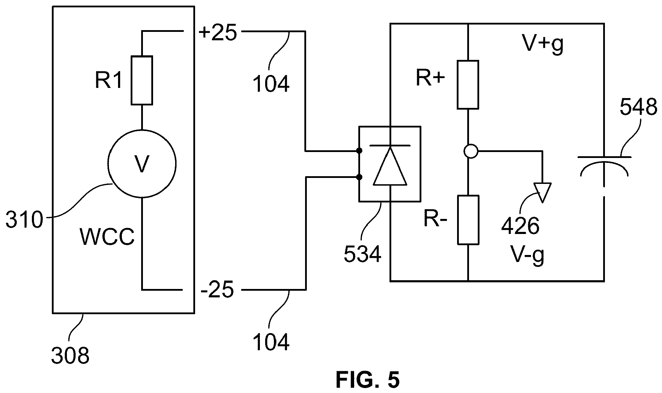

Figure 5 illustrates one example of performance of the control connection check or test. The power source may include a variable resistive element R1 that may represent or include one or more resistors that can change the amount of electrical resistance along the conductive pathway through which voltage and/or current is conducted between the power source and the contacts of the delivery device. The collector device may include or be connected with a diode 534 having the ground reference connection disposed in parallel with a capacitor 548. The resistive element R1 optionally can be a fixed resistance. In another embodiment there may not be a diode, and the DC bus may be directly connected to the pantograph.

The power source controller can direct the power source to vary the resistance of the variable resistive element so that a low voltage (e.g., fifty volts or another potential) is applied to contacts of the collector device. This voltage can be conducted through the diode and to the ground reference connection and the capacitor. The powered system controller can measure the energy stored in the capacitor and can measure the resistances R+, R-using the sensors. The power source controller can then change the resistance of the variable resistive element, such as by reducing the resistance. The powered system controller can then measure the energy stored in the capacitor and can measure the resistances R+, R- using the sensors, and calculate the series impedance and/or voltages conducted to the powered system using the measured resistances and/or capacitances. The measured impedances and/or voltages can be compared with the expected impedance and/or voltages, as described above, to ensure that the delivery and collector devices are properly connected for the transfer of power between the delivery and collector devices.

This test or check can be performed for additional delivery devices and/or collector devices of the same powered system and may be repeatedly performed to repeatedly check on the connection between the delivery and collector devices. If the powered system has several circuits or buses connected to the collector devices, then this test or check can be repeated for the additional circuits or buses. If the measured and expected values match or are within an acceptable threshold range of each other, then the power source controller can increase the voltage and/or current transferred to the powered system via the delivery and collector devices (such as by switching the communication contacts to additional positive or negative potential contacts and switching the grounding contacts to additional negative or positive potential contacts). If the measured and expected values do not match or are not within the acceptable threshold range of each other, then the power source controller can decrease the voltage and/or current, separate the delivery device from the collector device, or the like.

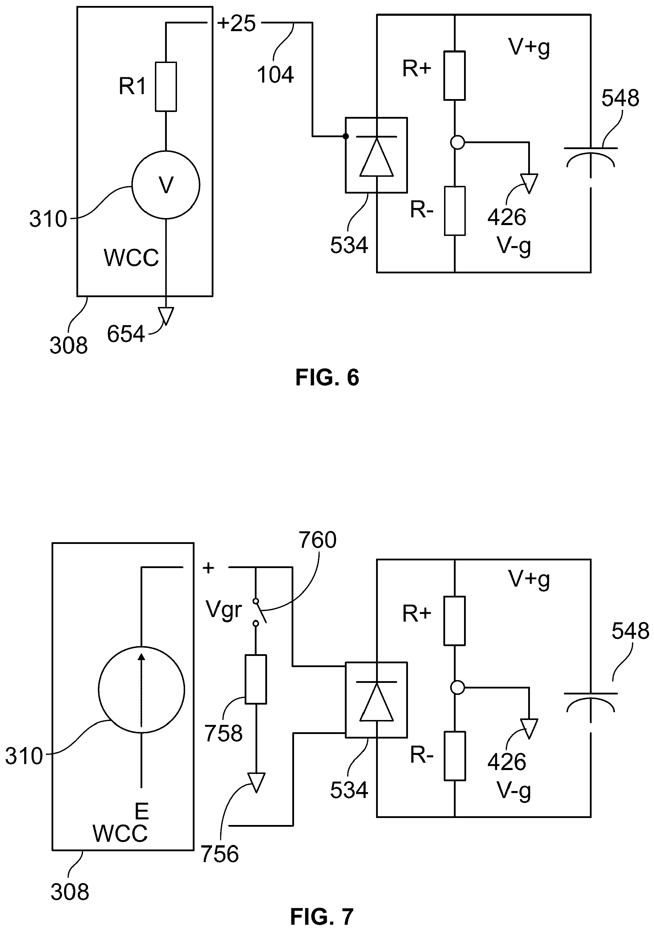

Figure 6 illustrates one example of performance of a ground reference connection check or test. The power source also may include a connection 654 to a ground reference. This connection may be examined using this test or check to ensure that the power source is safely grounded before switching the state of contacts to increase the transfer of power, as described above. In this check or test, the power source controller can direct the power source to apply a positive potential with respect to the ground reference to the collector device via the variable/fixed resistive element and the delivery device. This may be a low potential, such as fifty volts, twenty-five volts, or another value. As shown, only the positive potential may be applied via the contacts connected between the delivery and collector devices.

The powered system controller can measure the resistance R+ in the location between the diode and the ground reference connection of the collector device or powered system. Optionally, the power source controller can reduce the resistance provided by the variable resistive element, and the powered system controller can measure the resistance R+ again. The power source controller may then increase the voltage supplied by the power source to a high voltage (e.g., at least seven hundred volts or another value), and the powered system controller can measure the resistance R+. If the power source has a valid and functioning connection to the ground reference, then the powered system controller may measure little to no resistance R+ at the collector device due to the potentials generated by the power source being conducted to the ground reference connection of the power source.

But, if the power source does not have a valid and functioning connection to the ground reference, then the powered system controller may measure an increased resistance R+ at the collector device due to the potentials generated by the power source not being conducted to the ground reference connection of the power source. For example, if the measured resistances R+ exceed one or more threshold resistances (e.g., with different thresholds associated with different potentials generated by the power source), then one or more of the controllers can identify a fault or other failure of the ground reference connection of the power source. The power source controller can then deactivate the power source, separate the delivery device from the collector device, or the like. But if the measured resistances R+ do not exceed the threshold resistance(s), then one or more of the controllers can determine that the ground reference connection of the power source is working. The power source controller can then control the power source to supply increased energy to the collector device by switching the communication and/or ground connection contacts to conducting energy, as described above. This measurement can include the resistance of the ground path between the vehicle and the power source (i.e., between points 426 and 654). Another measurement may be done with regard to the power quality (frequency, voltage, potential, etc.).

This test or check can be performed for additional delivery devices and/or collector devices of the same powered system and may be repeatedly performed to repeatedly check on the ground connection of the power source. If the powered system has several circuits or buses connected to the collector devices, then this test or check can be repeated for the additional circuits or buses.

Figure 7 illustrates one example of performance of another ground reference connection check or test. This test or check may be used to ensure that the collector device and/or powered system is or are safely grounded before switching the state of contacts to increase the transfer of power, as described above. The powered system may include a ground connection 756 that is connected to the ground reference (e.g., the wheels of a vehicle, which may be connected to rails of a track; the chassis of the vehicle; the earth ground reference; etc.). The grounding connection may be connected with the collector device and the diode in a location between at least one of the contacts (or all the contacts) of the collector device and the diode. A resistive element 758 may be connected with the ground connection in a location between a switch 760 and the ground connection. Alternatively, no resistive element may be added between the switch 760 and the ground connection.

In this check or test, the power source controller can direct the power source to apply or inject a current with an upper voltage limit. For example, the power source can be controlled to conduct a one thousand amp current with up to twenty-five volts to the contacts of the collector device via the delivery device. Alternatively, another current and/or voltage may be used. The powered system controller can close the switch 760 to conductively couple the ground connection of the collector device and of the powered system. If the ground connection of the collector device is conductively coupled with the ground reference (e.g., the rails of a track on which the vehicle is disposed, the chassis of the vehicle, the earth ground reference, etc.), then the powered system controller and/or the power source controller (or a sensor, such as a voltage or current sensor) will detect or identify little to no voltage, current, resistance, or impedance at the interfaces between the contacts of the delivery device and the collector device (e.g., a voltage, current, resistance, or impedance greater than a threshold amount). But if the ground connection of the collector device is not conductively coupled with the ground reference, then the powered system controller and/or the power source controller will detect or identify voltage, current, resistance, or impedance at the interfaces (e.g., a voltage, current, resistance, or impedance no greater than the threshold amount). The powered system controller and/or the power source controller can thereby determine whether the collector device and/or powered system is conductively coupled with a ground reference (and that the collector device can safely receive increased energy transfer from the delivery device). The powered system controller can then safely switch the mode of operation of the contacts to increase power transfer, as described above.

Another test or check that may be performed can include the repeated closed loop connection check or test. This check or test can involve communications between the controllers via the communication devices and changing one or more parameters of the power transfer between the power source and the powered system via the delivery device and the collector device. For example, the powered system controller can communicate signals to the power source controller to inform the power source controller of whether the collector device is enabled to receive voltage or current from the power source (e.g., the collector device is connected with the loads of the power source by one or more closed switches), the voltage and/or current limit of the powered system (to prevent damaging the loads), the load(s) being powered by the voltage and/or current received from the power source, etc.

As another example, the power source controller can dither, or vary, the voltage and/or current conducted to the powered system via the delivery device with respect to time. The powered system controller can detect or identify these changes or variances (e.g., using the sensor(s) connected with the collector device) and communicate the variances back to the power source controller to verify that the connections between the contacts of the delivery device and the collector devices are still operating. If the changes detected by the powered system controller do not match the changes implemented by the power source controller, then one or more of the controllers may identify a fault or inoperative state of the power delivery system. The delivery device may separate from the collector device, the state of one or more of the contacts of the delivery device and/or collector device may change or revert back to a grounding contact or a communication contact, the powered system may be deactivated or stop movement, or the like. If the changes detected by the powered system controller do match the changes implemented by the power source controller, then one or more of the controllers may not identify a fault or inoperative state of the power delivery system. The delivery device may remain engaged with the collector device, the state of one or more of the contacts of the delivery device and/or collector device may not change or revert back, the powered system may remain active and/or moving, or the like.

As another example, the powered system controller can dither, or vary, the voltage and/or current conducted to the power source from the powered system (e.g., from the energy storage devices via the collector device) with respect to time. The power source controller can detect or identify these changes or variances (e.g., using sensor(s) connected with the delivery device) and communicate the variances back to the powered system controller to verify that the connections between the contacts of the delivery device and the collector devices are still operating. If the changes detected by the power source controller do not match the changes implemented by the powered system controller, then one or more of the controllers may identify a fault or inoperative state of the power delivery system. The delivery device may separate from the collector device, the state of one or more of the contacts of the delivery device and/or collector device may change or revert back to a grounding contact or a communication contact, the powered system may be deactivated or stop movement, or the like. If the changes detected by the power source controller do match the changes implemented by the powered system controller, then one or more of the controllers may not identify a fault or inoperative state of the power delivery system. The delivery device may remain engaged with the collector device, the state of one or more of the contacts of the delivery device and/or collector device may not change or revert back, the powered system may remain active and/or moving, or the like.

Not all powered systems may have the components described herein. For example, some powered systems may be unable to change or switch the operative state or mode of contacts to transfer more power. To avoid the power source controller attempting to send too much energy through the fewer available contacts of a powered system that cannot change the mode or state of contacts, the power source controller may identify the powered system. The power source controller may know (or access from a tangible and nontransitory computer readable memory) which powered systems are able to change the modes or states of contacts for increased power transfer.

In one example, the power source controller may identify a powered system and determine whether that powered system has the ability and components to change the state or mode of contacts by communicating with the powered system (e.g., via the communication devices). In another example, the power source controller can communicate with a sensor, such as a camera using optical character recognition of a number or identifying string on the powered system, an automated equipment identification (AEI) tag reader, or the like.

As shown in Figure 1, the powered system may have multiple collector devices. In one example, the powered system controller may change the operating state or mode of contacts of multiple collector devices to increase the power transfer, as described herein. In another example, the powered system controller may change the operating state or mode of contacts of fewer than all collector devices to increase the power transfer, as described herein. This can involve changing the grounding and communication contacts of one collector device to increase the power transfer, but not changing the grounding and communication contacts of another collector device (where these contacts can be used to continue to provide a ground reference connection and communication).

Optionally, the powered system controller can switch the modes of multiple contacts of the collector device to provide different phases of an alternating current from the delivery device. For example, the first contact of the collector device may conduct a first phase of current, the second contact of the collector device may conduct a second phase of the current, a third contact of the collector device may conduct a third phase of the current, and the fourth contact of the collector device may be used as a communication contact. Switches may be coupled with these contacts to invert the different phases into an alternating current.

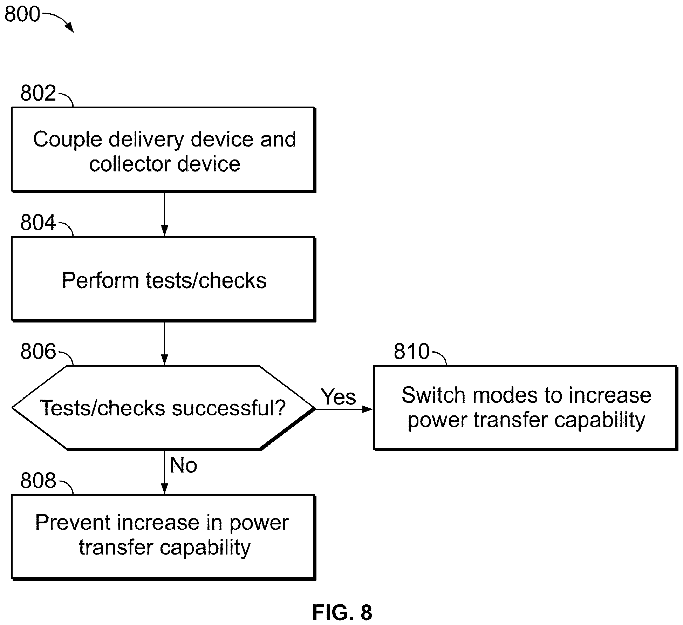

Figure 8 illustrates a flowchart of one example of a method 800 for controlling a power delivery system. The method can represent at least some of the operations performed by the power delivery system described herein. At step 802, the delivery device and the collector device are coupled with each other. At step 804, one or more tests or checks are performed. As described above, these tests can involve the control connection check or test, one or more earth or ground reference connection checks or tests, the repeated closed loop connection check or test, the identification check or test, or the like. At decision point 806, a decision is made as to whether the test(s) or check(s) was or were successfully passed or not. If the test(s) or check(s) was or were not successfully passed, then flow of the method can proceed toward step 808. At step 808, the delivery device and/or the collector device are either prevented from transferring electric energy between the devices, or the delivery device and the collector device are prevented from switching the modes or states of contacts to increase the amount of power transferred. The method can then return to one or more other steps, operations, or decisions, or the method may terminate.

If the test(s) or check(s) was or were successfully passed, then flow of the method can proceed toward step 810. At step 810, the state or mode of one or more contacts of the delivery device and/or the collector device is switched to increase the power transfer between the devices. For example, the grounding contacts and/or communication contacts may switch to conducting positive and negative potential, as described above. Flow of the method can then return to one or more prior operations, steps, or decisions, or can terminate. Some of these steps (e.g., steps 804 and 806) may be repeatedly or continuously performed during power transfer so as to monitor the health of the connection and communication (for example, using a dither technique). If the continuous or repeated check sees a deviation, the power transfer can be disabled and disconnected and/or detailed checks or tests such as the tests described in connection with Figures 5, 6, and/or 7 performed again.

In one example, a power delivery system is provided that may include a collector device that can selectively couple a vehicle with a delivery device coupled with an off-board power source. The collector device may include conductive contacts that each can engage the delivery device. The contacts may switch modes of operation to change a power transfer capability of the collector device. The contacts may separately conduct a positive potential, conduct a negative potential, conduct a communication signal, and provide a connection to a ground reference in a first mode of operation of the modes of operation. The contacts may separately conduct the positive potential, conduct an additional amount of the positive potential, conduct the negative potential, and conduct an additional amount of the negative potential in a second mode of operation of the modes of operation.

Prior to switching from the first mode of operation to the second mode of operation, at least one of the contacts of the collector device may communicate with the power source to identify the vehicle. The power delivery system may include a communication device that can communicate with the power source regarding transfer of the positive potential, the additional amount of the positive potential, the negative potential, and the additional amount of the negative potential subsequent to the vehicle being identified.

Prior to switching from the first mode of operation to the second mode of operation, at least one of the contacts of the collector device may test a connection to a ground reference of one or more of the vehicle or the power source. The power delivery system may include a controller of the vehicle that can test the connection to the ground reference by directing a grounding resistance be connected with the collector device and by measuring one or both of a voltage or a current at an interface between the collector device and the delivery device.

The power delivery system may include a powered system controller of the vehicle that can repeatedly measure one or more of a voltage or a current conducted from the power source to the vehicle via the delivery device and the collector device. The powered system controller may repeatedly communicate the one or more of the voltage or the current that is measured to a power source controller of the power source to repeatedly test a connection between the collector device and the delivery device. The power delivery system may include a sensor that can detect one or more of identifying indicia or a wirelessly readable tag configured to be coupled with the vehicle for identifying the vehicle.

In another example, a method (for controlling conduction of power between a vehicle and a delivery device) may include selectively coupling a collector device of a vehicle with a delivery device coupled with an off-board power source, separately conducting a positive potential and a negative potential between the power source and the vehicle via different contacts of the collector device in a first mode of operation, separately establishing a grounding connection and a communication pathway between the power source and the vehicle via the different contacts of the collector device in the first mode of operation, switching the different contacts from the first mode of operation to a second mode of operation, and separately conducting the positive potential, an additional amount of the positive potential, the negative potential, and an additional amount of the negative potential between the power source and the vehicle via the different contacts of the collector device in the second mode of operation.

The method also may include communicating with the power source via at least one of the contacts to identify the vehicle prior to switching from the first mode of operation to the second mode of operation. The method may include communicating with the power source regarding transfer of the positive potential, the additional amount of the positive potential, the negative potential, and the additional amount of the negative potential subsequent to the vehicle being identified.

The method can include testing a connection to a ground reference of one or more of the vehicle or the power source at least one of the contacts of the collector device prior to switching from the first mode of operation to the second mode of operation. The connection to the ground reference may be tested by directing a grounding resistance be connected with the collector device and by measuring one or both of a voltage or a current at an interface between the collector device and the delivery device.

The method also may include repeatedly measuring one or more of a voltage or a current conducted from the power source to the vehicle via the delivery device and the collector device. The method may include repeatedly communicating the one or more of the voltage or the current that is measured to a power source controller of the power source to repeatedly test a connection between the collector device and the delivery device. The method also can include detecting one or more of identifying indicia or a wirelessly readable tag configured to be coupled with the vehicle for identifying the vehicle.

In another example, a power delivery system may include a collector device that can be coupled with a powered system and may include separate conductive contacts that can engage with corresponding contacts of a delivery device coupled with a power source that is outside the powered system. The power delivery system may include a controller that can switch one or more of the contacts of the collector device from providing one or more of a communication pathway with the power source or a grounding connection in a first mode of operation to conducting additional potential between the power source and the powered system in a second mode of operation to increase a power transfer between the power source and the powered system.

Prior to switching from the first mode of operation to the second mode of operation, the controller may identify the powered system via conduction of a designated potential between the power source and the powered system through at least one of the contacts. The controller may repeatedly measure one or more of the additional potential, a current, or an impedance conducted between the collector device and the delivery device subsequent to switching from the first mode of operation to the second mode of operation. The controller can communicate the one or more of the additional potential, the current, or the impedance to the power source.

In one embodiment, the control system may have a local data collection system deployed that may use machine learning to enable derivation-based learning outcomes. The controller may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for powered system performance and behavior analytics, and the like.

In one embodiment, the controller(s) may include a policy engine that may apply one or more policies. These policies may be based at least in part on characteristics of a given item of equipment or environment. With respect to control policies, a neural network can receive input of a number of environmental and task-related parameters. These parameters may include an identification of the powered system, an amount of voltage, current, or impedance that is measured, etc. The neural network can be trained to generate an output based on these inputs, with the output representing a decision to change the mode or state of contacts, as described above. During operation of one embodiment, a determination can occur by processing the inputs through the parameters of the neural network to generate a value at the output node designating that action as the desired action. This action may translate into a signal that causes the powered system to operate. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models is obtained, they may be evaluated on their performance using a determined success metric. The best model is selected, and the powered system controller executes that plan to achieve the desired input data to mirror the predicted best outcome scenario. Additionally, the success metric may be a combination of the optimized outcomes, which may be weighed relative to each other.

The controller can use this artificial intelligence or machine learning to receive input (e.g., a measured current, voltage, and/or impedance), use a model that associates different values and/or combinations of this input with different decisions on whether to change modes or states of contacts, and then provide an output (e.g., the decision whether to change the state or mode of the contacts). The controller may receive additional input of the change in operating mode that was selected, such as analysis of noise or interference in communication signals (or a lack thereof), operator input, or the like, that indicates whether the machine-selected operating mode provided a desirable outcome or not. Based on this additional input, the controller can change the model, such as by changing which operating mode would be selected when a similar or identical location or change in location is received the next time or iteration. The controller can then use the changed or updated model again to select an operating mode, receive feedback on the selected operating mode, change or update the model again, etc., in additional iterations to repeatedly improve or change the model using artificial intelligence or machine learning.

Use of phrases such as "one or more of ... and," "one or more of ... or," "at least one of ... and," and "at least one of ... or" are meant to encompass including only a single one of the items used in connection with the phrase, at least one of each one of the items used in connection with the phrase, or multiple ones of any or each of the items used in connection with the phrase. For example, "one or more of A, B, and C," "one or more of A, B, or C," "at least one of A, B, and C," and "at least one of A, B, or C" each can mean (1) at least one A, (2) at least one B, (3) at least one C, (4) at least one A and at least one B, (5) at least one A, at least one B, and at least one C, (6) at least one B and at least one C, or (7) at least one A and at least one C.

As used herein, an element or step recited in the singular and preceded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following claims, the terms "first," "second," and "third," etc. are used merely as labels, and do not impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function devoid of further structure.

The above description is illustrative, and not restrictive. For example, the above-described embodiments (and/or aspects thereof) may be used in combination with each other. In addition, many modifications may be made to adapt a particular situation or material to the teachings of the subject matter without departing from its scope. While the dimensions and types of materials described herein define the parameters of the subject matter, they are exemplary embodiments. The scope of the subject matter should, therefore, be determined with reference to the appended claims, along with the full scope of equivalents to which such claims are entitled.

This written description uses examples to disclose several embodiments of the subject matter, including the best mode, and to enable one of ordinary skill in the art to practice the embodiments of subject matter, including making and using any devices or systems and performing any incorporated methods. The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

The following clauses recite inventive aspects of the subject matter described herein:
1. A method comprising:
   selectively coupling a collector device of a vehicle with a delivery device coupled with an off-board power source;
   separately conducting a positive potential and a negative potential between the power source and the vehicle via different contacts of the collector device in a first mode of operation;
   separately establishing a grounding connection and a communication pathway between the power source and the vehicle via the different contacts of the collector device in the first mode of operation;
   switching the different contacts from the first mode of operation to a second mode of operation; and
   separately conducting the positive potential, an additional amount of the positive potential, the negative potential, and an additional amount of the negative potential between the power source and the vehicle via the different contacts of the collector device in the second mode of operation.
2. The method of clause 1, further comprising:
   testing a connection to a ground reference of one or more of the vehicle or the power source at least one of the contacts of the collector device prior to switching from the first mode of operation to the second mode of operation.
3. The method of clause 1, wherein the connection to the ground reference is tested by directing a grounding resistance be connected with the collector device and by measuring one or both of a voltage or a current at an interface between the collector device and the delivery device.
4. The method of clause 1, further comprising:
   repeatedly measuring one or more of a voltage or a current conducted from the power source to the vehicle via the delivery device and the collector device.
5. The method of clause 4, further comprising:
   repeatedly communicating the one or more of the voltage or the current that is measured to a power source controller of the power source to repeatedly test a connection between the collector device and the delivery device.
6. The method of clause 1, further comprising:
   detecting one or more of identifying indicia or a wirelessly readable tag configured to be coupled with the vehicle for identifying the vehicle.

## Claims

1. A system (102) comprising:
a collector device (104) configured to selectively couple a vehicle (100) with a delivery device (308) coupled with an off-board power source (310), the collector device (104) including conductive contacts (212, 214, 216, 218, 312, 314, 316, 318) each configured to engage the delivery device (308), the contacts (212, 214, 216, 218, 312, 314, 316, 318) configured to switch modes of operation to change a power transfer capability of the collector device (104),
the contacts (212, 214, 216, 218, 312, 314, 316, 318) configured to separately conduct a positive potential, conduct a negative potential, conduct a communication signal, and provide a connection to a ground reference (426) in a first mode of operation of the modes of operation, and
the contacts (212, 214, 216, 218, 312, 314, 316, 318) are configured to separately conduct the positive potential, conduct an additional amount of the positive potential, conduct the negative potential, and conduct an additional amount of the negative potential in a second mode of operation of the modes of operation.

2. The system (102) of claim 1, wherein, prior to switching from the first mode of operation to the second mode of operation, at least one of the contacts (212, 214, 216, 218, 312, 314, 316, 318) of the collector device (104) is configured to communicate with the power source (310) to identify the vehicle (100).

3. The system (102) of claim 2, further comprising a communication device (422) configured to communicate with the power source (310) regarding transfer of the positive potential, the additional amount of the positive potential, the negative potential, and the additional amount of the negative potential subsequent to the vehicle (100) being identified.

4. The system (102) of claim 1, wherein prior to switching from the first mode of operation to the second mode of operation, at least one of the contacts (212, 214, 216, 218, 312, 314, 316, 318) of the collector device (104) is configured to test a connection to a ground reference (426) of one or more of the vehicle (100) or the power source (310).

5. The system (102) of claim 4, further comprising a controller (120) of the vehicle (100) configured to test the connection to the ground reference (426) by directing a grounding resistance be connected with the collector device (104) and by measuring one or both of a voltage or a current at an interface between the collector device (104) and the delivery device (308).

6. The system (102) of claim 1, further comprising a powered system controller (120) of the vehicle (100) configured to repeatedly measure one or more of a voltage or a current conducted from the power source (310) to the vehicle (100) via the delivery device (308) and the collector device (104).

7. The system (102) of claim 6, wherein the powered system controller (120) is configured to repeatedly communicate the one or more of the voltage or the current that is measured to a power source (310) controller (120) of the power source (310) to repeatedly test a connection between the collector device (104) and the delivery device (308).

8. The system (102) of claim 1, further comprising a sensor (438) configured to detect one or more of identifying indicia or a wirelessly readable tag configured to be coupled with the vehicle (100) for identifying the vehicle (100).

9. A method comprising:
selectively coupling a collector device (104) of a vehicle (100) with a delivery device (308) coupled with an off-board power source (310);
separately conducting a positive potential and a negative potential between the power source (310) and the vehicle (100) via different contacts (212, 214, 216, 218, 312, 314, 316, 318) of the collector device (104) in a first mode of operation;
separately establishing a grounding connection and a communication pathway between the power source (310) and the vehicle (100) via the different contacts (212, 214, 216, 218, 312, 314, 316, 318) of the collector device (104) in the first mode of operation;
switching the different contacts (212, 214, 216, 218, 312, 314, 316, 318) from the first mode of operation to a second mode of operation; and
separately conducting the positive potential, an additional amount of the positive potential, the negative potential, and an additional amount of the negative potential between the power source (310) and the vehicle (100) via the different contacts (212, 214, 216, 218, 312, 314, 316, 318) of the collector device (104) in the second mode of operation.

10. The method of claim 9, further comprising:
communicating with the power source (310) via at least one of the contacts (212, 214, 216, 218, 312, 314, 316, 318) to identify the vehicle (100) prior to switching from the first mode of operation to the second mode of operation.

11. The method of claim 10, further comprising:
communicating with the power source (310) regarding transfer of the positive potential, the additional amount of the positive potential, the negative potential, and the additional amount of the negative potential subsequent to the vehicle (100) being identified.

12. A system (102) comprising:
a collector device (104) configured to be coupled with a powered system (100), the collector device (104) including separate conductive contacts (212, 214, 216, 218, 312, 314, 316, 318) configured to engage with corresponding contacts (212, 214, 216, 218, 312, 314, 316, 318) of a delivery device (308) coupled with a power source (310) that is outside the powered system (100); and
a controller (120) configured to switch one or more of the contacts (212, 214, 216, 218, 312, 314, 316, 318) of the collector device (104) from providing one or more of a communication pathway with the power source (310) or a grounding connection in a first mode of operation to conducting additional potential between the power source (310) and the powered system (100) in a second mode of operation to increase a power transfer between the power source (310) and the powered system (100).

13. The system (102) of claim 12, wherein, prior to switching from the first mode of operation to the second mode of operation, the controller (120) is configured to identify the powered system (100) via conduction of a designated potential between the power source (310) and the powered system (100) through at least one of the contacts (212, 214, 216, 218, 312, 314, 316, 318).

14. The system (102) of claim 12, wherein the controller (120) is configured to repeatedly measure one or more of the additional potential, a current, or an impedance conducted between the collector device (104) and the delivery device (308) subsequent to switching from the first mode of operation to the second mode of operation.

15. The system (102) of claim 14, wherein the controller (120) is configured to communicate the one or more of the additional potential, the current, or the impedance to the power source (310).
